Europäisches Patentamt

European Patent Office

Office européen des brevets

(19)

(11) Veröffentlichungsnummer: **0 250 928 B1**

# (12) EUROPÄISCHE PATENTSCHRIFT

(45) Veröffentlichungstag der Patentschrift: **09.10.91**

(21) Anmeldenummer: **87108156.8**

(22) Anmeldetag: **05.06.87**

(51) Int. Cl.5: **B61H 13/02, B60T 17/08, B61H 15/00**

(54) **Integrierte Handbremseinrichtung.**

(30) Priorität: **27.06.86 DE 3621638**

(43) Veröffentlichungstag der Anmeldung:
**07.01.88 Patentblatt 88/01**

(45) Bekanntmachung des Hinweises auf die
Patenterteilung:
**09.10.91 Patentblatt 91/41**

(84) Benannte Vertragsstaaten:
**AT CH DE ES FR GB IT LI SE**

(56) Entgegenhaltungen:
**FR-A- 1 421 772**
**FR-A- 2 291 067**

(73) Patentinhaber: **Bergische Stahl-Industrie**
**Papenbergerstrasse 38**
**W-5630 Remscheid(DE)**

(72) Erfinder: **Rocholl, Hans**
**Damaschkestrasse 17a**
**W-5630 Remscheid(DE)**
Erfinder: **Klein, Horst**
**Erlenstrasse 23**
**W-5630 Remscheid(DE)**

(74) Vertreter: **Jung, Hermann L., Dipl.-Chem.**
**Postfach 1728 Augusta-Allee 10**
**W-6380 Bad Homburg v.d.H.(DE)**

**Beschreibung**

Die Erfindung betrifft eine integrierte Handbremseinrichtung an einer Bremsbetätigungseinheit, insbesondere für Schienenfahrzeuge, mit einem hydraulischen oder pneumatischen Zylinder, wobei die Bremsbetätigungseinheit einen Gestängesteller aus zwei teleskopartig relativ zueinander verschiebbaren Teilen besteht, von denen ein Teil als Spindel mit einem Schraubgewinde ausgebildet ist und der andere rohrförmige Teil fest mit einer Mutter verbunden ist, die auf der Spindel mit einem nicht selbsthemmenden Gewinde aufgeschraubt ist, und ein Anschlag auf dem rohrförmigen Teil in axialer Richtung fest aber leicht drehbar vorgesehen ist und zwischen Kolben und dem Abtriebsteil eine Betätigungsfeder eingespannt ist (siehe z.B. die FR-A-2 291 067).

Bei derartigen Betätigungseinrichtungen bereitet es immer wieder Schwierigkeiten, eine Handbremseinrichtung vorzusehen, die einerseits sicher funktioniert ohne aber andererseits zu aufwendig zu sein, was das Gewicht wesentlich erhöhen würde. Meist hat man daher für die Handbremse eine zusätzliche leichte Bremse auf der Rückseite des Kolbens vorgesehen, sodass die Gestängenachstellvorrichtung allein steht und einwandfrei funktionieren kann. Wegen Platzmangel sollte aber die Handbremse auch bei der Nachstellvorrichtung angeordnet sein.

Der vorliegenden Erfindung liegt daher die Aufgabe zugrunde, die bekannten Nachteile der bekannten Vorrichtungen zu vermeiden und eine Einrichtung zu schaffen, welche einfach in der Betätigungseinheit integriert sein kann, ohne aber aufwendige zusätzliche Einrichtungen zu benötigen.

Die Lösung der Aufgabe besteht darin, dass aussen auf dem die Betätigungsfeder umschliessenden rohrförmigen Teil ein Handbremsrohr mit Gleitsitz aufliegt, dessen eines Ende mit dem Kolben des Betätigungszylinders bzw. mit einem in diesem verschiebbar gelagerten Einsatz fest verbunden ist und an dessen anderem Ende eine etwa radial durch das Gehäuse herausgeführter Bolzen, Stift o.ä. angelenkt ist.

Zweckmässig ist der Bolzen, Stift etc, mit einer Hülse, einem Ring etc. auf dem Gehäuse achsparallel bewegbar.

Der Vorteil dieser erfindungsgemässen Konstruktion liegt darin, dass nur ein weiteres Rohr in der Betätigungseinheit angeordnet werden muss, welches einfach an der auf dem Gehäuse der Betätigungseinheit gelagerten Hülse etc. in Längsrichtung verschoben werden kann, um die Handbremse zu betätigen.

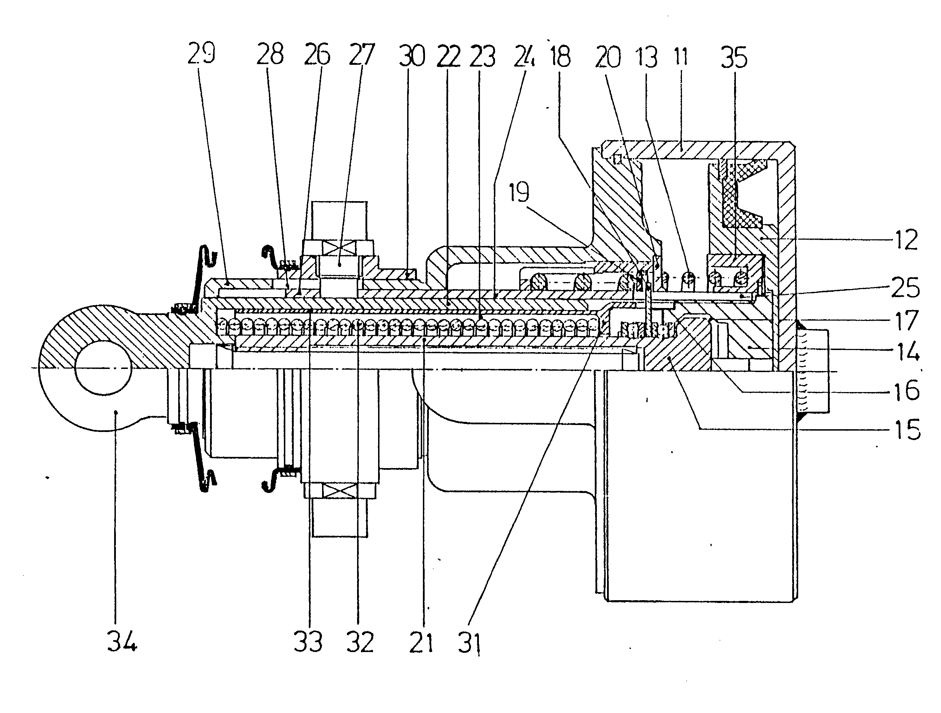

In der Zeichnung ist eine beispielsweise Ausführungsform der Erfindung dargestellt, welche bei einer Betätigungseinheit mit einem hydraulischen Zylinder und einem Gestängesteller verwendet wird. Der im Zylinder 11 gelagerte Kolben 12 wird von einer Rückholfeder 13 in der in der Zeichnung dargestellten Ruhestellung gehalten. Am Kolben 12 ist ein Fortsatz 14 angebracht, welcher zusammen mit dem Flansch 15 zwei Kupplungspaare 16 und 17 bildet. Diese Kupplungspaare 16 und 17 bilden zusammen mit dem Anschlag 18, welcher sich etwa radial zwischen die beiden Gegenlager 19 und 2o erstreckt, einen wesentlichen Teil der Nachstellvorrichtung. Der Anschlag 18 ist axial fest aber leicht drehbar auf dem rohrförmigen Teil 21 gelagert, wobei der Flansch 15 am Ende des rohrförmigen Teils 21 angeordnet ist. Auf dem äusseren Rohr 22, das zusammen mit dem rohrförmigen Teil 21 den Raum 23 für die Betätigungsfeder 32 bildet, liegt mit Gleitsitz das Handbremsrohr 24, das mit seinem einen Ende 25 fest mit dem Kolben 12 verschraubt ist. Am anderen Ende 26 des Handbremsrohrs 24 sind diametral zueinander je ein radial sich nach aussen erstreckender Bolzen 27 oder Stift vorgesehen, welcher in einem Längsschlitz 28 des Gehäuses 29 verschoben werden kann, wobei die Führung für diesen Bolzen 27 eine Hülse 3o oder ein Ring vornimmt, welcher auf dem Gehäuse 29 gelagert ist.

Für die Betätigung der Handbremse braucht nun nur das Handbremsrohr 26 mittels der Bolzen 27 im Schlitz 28 verschoben zu werden, wodurch der Kolben 12 ebenfalls verschoben wird, was dann denselben Effekt ergibt, als wenn der Kolben durch das Druckmedium verschoben wird.

Dies bedeutet aber auch, dass mit der Betätigung der Handbremse die Nachstellung des Gestängestllers eintritt. Es wird also bei allen Bewegungen des Kolbens 12 nachgestellt, sei es bei einer Betriebsbremsung oder einer Betätigung der Handbremse. Dies ist ein wesentlicher Vorteil der erfindungsgemässen Vorrichtung, weil dieser Effekt ohne eine wesentliche Gewichtsvermehrung der Bremsbetätigungseinheit erreicht werden kann.

Es kann aber auch zweckmässig sein, eine Bewegung des Kolbens 12 bei der Betätigung der Handbremse zu vermeiden. In diesem Fall wird im Kolben 12 ein Einsatz 35 verschiebbar gelagert, welcher mit dem Ende 25 des Handbremsrohrs verbunden ist, wobei der Einsatz 35 an dem verschiebbar im Kolben 12 gelagerten Fortsatz 14 befestigt ist. Auch dann wird bei Betätigung der Handbremse nachgestellt.

Ein besonderer zusätzlicher Vorteil besteht noch darin, dass erfindungsgemässe Handbremsrohr 24 Führungsaufgaben sowohl in axialer als auch in konzentrischer Richtung übernimmt und als Verdrehsicherung für den Kolben 12 wirkt.

Selbstverständlich ist es ohne weiteres möglich, das Gewicht noch dadurch zu verringern, dass das Handbremsrohr 24 nicht mehr ein volles Rohr ist, sondern nur noch aus einzelnen Segmenten besteht, welche wie das Rohr am Kolben 12 und am Bolzen 27 befestigt sind. Das Widerlager 31 für die Betätigungsfeder 32 bildet einen Teil einer Führungshülse 33, wodurch die Führung und das Vermeiden von Ausknickungen der Feder 32 erreicht wird, wenn das Auge 34 als Abtriebsteil wegen sehr grosser Nachstellung weit aus dem Gehäuse 29 herausgefahren ist.

**Patentansprüche**

1. Integrierte Handbremseinrichtung an einer Bremsbetätigungseinheit, insbesondere für Schienenfahrzeuge, mit einem hydraulischen oder pneumatischen Zylinder (11), wobei die Bremsbetätigungseinheit einen Gestängesteller aus zwei teleskopartig relativ zueinander verschiebbaren Teilen besitzt, von denen ein Teil als Spindel mit einem Schraubgewinde ausgebildet ist und der andere rohrförmige Teil fest mit einer Mutter verbunden ist, die auf der Spindel mit einem nicht selbsthemmenden Gewinde aufgeschraubt ist und ein Anschlag (18) auf dem rohrförmigen Teil in axialer Richtung fest aber leicht drehbar vorgesehen ist und zwischen dem Kolben (12) und dem Abtriebsteil eine Betätigungsfeder (32) eingespannt ist, dadurch gekennzeichnet, dass aussen auf dem die Betätigungsfeder (32) umschliessenden rohrförmigen Teil (22) ein Handbremsrohr (24) mit Gleitsitz aufliegt, dessen eines Ende (25) mit dem Kolben (12) des Betätigungszylinders (11) bzw. einem in diesem verschiebbar gelagerten Einsatz (35) festverbunden ist und an dessen anderem Ende (26) ein etwa radial durch das Gehäuse (29) herausgeführter Bolzen (27), Stift o.ä. angelenkt ist.

2. Integrierte Handbremseinrichtung nach Anspruch 1, dadurch gekennzeichnet, dass der Bolzen (27) o.ä. mit einer Hülse (3o), einem Ring etc. auf dem Gehäuse (29) achsparallel bewegbar ist.

3. Integrierte Handbremseinrichtung nach Anspruch 1 oder 2, dadurch gekennzeichnet, dass das Handbremsrohr (24) in mehrere Segmente aufgeteilt ist, welche mit dem Kolben (12) bzw. dem Fortsatz (14) verbunden sind.

**Claims**

1. Integrated hand brake device on a brake actuation unit, particularly for rail vehicles, with a hydraulic or pneumatic cylinder (11), the brake actuation unit having a slack adjuster made up of two mutually telescopically displaceable parts, of which one part is designed as a spindle with a screw thread and the other tubular part is permanently connected to a nut which is screwed onto the spindle by means of a reversible thread (not self-locking), and a stop (18), permanently connected in the axial direction but easily rotatable, is provided on the tubular part and an actuation spring (32) is clamped between the piston (12) and the drive part, characterized in that a hand brake tube (24) is seated with a sliding fit on the outside of the tubular part (22) surrounding the actuation spring (32), one end of which hand brake tube (24) is permanently connected to the piston (12) of the actuation cylinder (11) or to an insert (35) displaceably supported within it and a pin (27), peg, etc leading out approximately radially through the casing (29) is hinged at the other end of the hand brake tube (24).

2. Integrated hand brake device according to Claim 1, characterized in that the pin (27), etc can be moved on the casing (29) parallel to its axis by means of a sleeve (30), a ring, etc.

3. Integrated hand brake device according to Claim 1 or 2, characterized in that the hand brake tube (24) is subdivided into a plurality of segments which are connected to the piston (12) or the extension (14).

**Revendications**

1. Dispositif de frein à main intégré à une unité d'actionnement de frein à main, en particulier pour véhicules sur rails, avec un cylindre hydraulique ou pneumatique (11), l'unité d'actionnement du frein possédant un régleur de timonerie composé de deux parties pouvant coulisser de manière télescopique l'une par rapport à l'autre, l'une de ces parties étant configurée en forme de tige avec un filet et l'autre partie tubulaire étant reliée de façon rigide avec un écrou vissé sur la tige avec un filet non autobloquant, et une butée (18), fixe en direction axiale mais pouvant tourner facilement, étant prévue sur la partie tubulaire, et un ressort d'actionnement (32) étant monté entre le piston (12) et la partie actionnée, caractérisé en ce que, à l'extérieur, sur la partie tubulaire (22) entourant le ressort d'actionnement (32), se trouve un tube de frein à main coulissant (24), dont une extrémité (25) est reliée de façon fixe avec le piston (12) du cylindre d'actionnement (11) ou avec une pièce (35) pouvant coulisser dans celui-ci, un boulon (27), une tige ou autre élément analogue sortant du boîtier (29) en sens à peu près radial étant articulé sur l'autre extrémité.

2. Dispositif de frein à main intégré selon la revendication 1, caractérisé en ce que le bouton (27) est mobile en direction parallèle à l'axe, entre autres avec une douille (30), d'une bague, etc. sur le boîtier (29).

3. Dispositif de frein à main intégré selon la revendication 1 ou 2, caractérisé en ce que le tube de frein à main (24) est divisé en plusieurs segments qui sont reliés au piston (12) ou au prolongement (14).